**Europäisches Patentamt**

(19) **European Patent Office**

**Office européen des brevets**

(11) Veröffentlichungsnummer: **0 173 726**
**B1**

(12) # EUROPÄISCHE PATENTSCHRIFT

(45) Veröffentlichungstag der Patentschrift:
**10.08.88**

(51) Int. Cl.⁴: **B 60 R 22/42**, B 60 R 22/18

(21) Anmeldenummer: **85901397.1**

(22) Anmeldetag: **14.02.85**

(86) Internationale Anmeldenummer:
**PCT/EP 85/00050**

(87) Internationale Veröffentlichungsnummer:
**WO 85/03676 (29.08.85 Gazette 85/19)**

(54) **UMLENKVORRICHTUNG FÜR EINEN SICHERHEITSGURT MIT ABGESTUFTER GURTBANDKLEMMUNG.**

(30) Priorität: **25.02.84 DE 3406946**
**03.04.84 DE 3412383**

(43) Veröffentlichungstag der Anmeldung:
**12.03.86 Patentblatt 86/11**

(45) Bekanntmachung des Hinweises auf die Patenterteilung:
**10.08.88 Patentblatt 88/32**

(84) Benannte Vertragsstaaten:
**AT BE CH DE FR GB LI LU NL SE**

(56) Entgegenhaltungen:
**EP-A-0 034 702**
**DE-B-1 481 969**
**FR-A-2 201 849**
**FR-A-2 227 026**
**FR-A-2 227 880**
**FR-A-2 323 405**
**FR-A-2 383 677**
**GB-A-2 042 053**
**GB-A-2 099 685**

(73) Patentinhaber: **BRITAX- KOLB GMBH & CO,**
**Theodor- Heuss- Strasse 2, D-8060 Dachau (DE)**

(72) Erfinder: **ERNST, Hans, H., Eschenweg 4, D-2061**
**Sülfeld (DE)**

(74) Vertreter: **Lehn, Werner, Dipl.- Ing., Hoffmann,**
**Eitle & Partner Patentanwälte Arabellastrasse 4,**
**D-8000 München 81 (DE)**

## Beschreibung

Die Erfindung behandelt eine Umlenkvorrichtung gemäß dem Oberbegriff des Anspruchs 1 (DE-B-1 481 969).

Bei heutigen Sicherheitsgurten wird im Unfall der Aufrollautomat gesperrt und überträgt dort die Last vom Insassen über den Umlenkbeschlag in die Karosserie. Durch den Filmspuleneffekt auf der Wickelrolle des Aufrollers und der Dehnung des Gurtbandes zwischen Aufroller und Umlenkbeschlag erfährt der Insasse eine zusätzliche Vorverlagerung, die sich - insbesondere bei Kleinwagen - ungünstig bemerkbar machen kann. Es ist ein Kopfaufprall auf Lenkrad und Armaturenbrett möglich.

Um diese zusätzliche Vorverlagerung zu vermeiden, ist es sinnvoll, die Gurtbandarretierung bereits im Umlenkbeschlag, also so nah wie möglich beim Insassen, vorzunehmen. Diesbezüglich sind bereits mehrere Lösungen vorgeschlagen worden, die sich alle auf das Blockierprinzip gemäß DE-PS-1 481 969 zurückführen lassen. An einem drehbar gelagerten Blockierkörper greift die Gurtauszugskraft mit einem Hebelarm ($L_1$) an und wirkt sich durch einen kleineren Hebelarm ($L_2$) als Gurtklemmkraft aus. Aus diesem Grundprinzip sind in der Nachfolgezeit etwas voneinander differierende Weiterentwicklungen entstanden.

Die entscheidenden Beirteilungskriterien für die Effizienz der einzelnen Lösungsvorschläge sind die Klemmwirkung in Abhängigkeit von der Gurtauszugsrichtung und die Aggressivität der Klemmstellen bei ständiger Blockierung des Gurtbandes.

So zeigt die DE-OS-2 420 848 eine Klemmvorrichtung, die weitgehend unkritisch auf unterschiedliche Gurtaustrittswinkel reagiert. Die Klemmwirkung ist am günstigsten (größter Hebelarm), wenn das Gurtband waagerecht austritt, wie in der EP 0 034 702 dargestellt. Jedoch ist hier eine hohe Reibung mit einem Reibwert $\mu$ von über 1 erforderlich, um eine schlupffreie Klemmung des Gurtbandes zu erreichen. Das erfordert aggressive (scharfkantige) Klemmflächen, was sich nachteilig auf die Haltbarkeit des textilen Gurtbandes bei häufigen Blockiervorgängen auswirkt.

Denkbar wäre der Einsatz einer solchen Klemmvorrichtung in Verbindung mit einer Sollbruchstelle und einer Aktivierung nur im Unfall, etwa ab einer mittleren Belastung von ca. 4 kN Gurtauszugskraft. Das erfordert aber einen weitgehend stabilen Aufrollautomaten. Einer der wesentlichen Vorteile einer die gesamte Belastung aufnehmende Umlenkklemmvorrichtung liegt aber gerade darin, daß der Einsatz leichter und billiger Aufrollautomaten möglich wird, weil eine Lastübertragung im Aufroller nicht mehr zu erfolgen braucht. Auch würde schon ein Teil des Filmspuleneffektes einsetzen.

Eine andere Variante zeigt die DE-OS-2 348 654 und ein Prototyp davon in den Fig. 7 und 8 die DE-OS-2 540 302. Diese Ausführungsform verzichtet zwar auf aggressive Klemmflächen, ist jedoch sehr anfällig bei waagerechtem Gurtauszug. Die Klemmwirkung ist nicht ausreichend; sie ist mit Schlupf behaftet. In heutigen Fahrzeugen ist bei großen Insassen (entsprechend 95 %-Dummy) ein waagerechter Gurtauszug auf die Schulter des Insassen möglich. Außerdem ergibt sich bei dieser Version, die immer mit einem Elektromagneten zur Auslösung gekoppelt ist, durch den großen Schwenkwinkel ein relativ großer Wegverlust im Gurtband, der sich als ungünstige Vorverlagerung des Insassen bemerkbar macht.

Gemäß der GB-A-2 099 685 ist eine gewellte Gegendrückwange unter Zwischenanordnung einer komprimierbaren Schicht festgelegt, die erst ab einer Überlast von 1.800 daN dahgehend wirksam wird, daß zur Vermeidung einer Überbelastung bzw. einem Bruch des Gurtbandes ein Gurtbandschlupf auftritt.

Der Erfindung liegt die Aufgabe zugrunde, einen Umlenkbeschlag mit Mitteln zur direkten Gurtbandarretierung zu schaffen, bei dem der Klemmvorgang unverzüglich, auf kürzestem Wege, gurtbandschonend und schlupffrei erfolgt, und die Gurtbandauszugsrichtung ohne nachteiligen Einfluß bleibt.

Diese Aufgabe wird erfindungsgemäß dadurch gelöst, daß eine zweistufige Arretierungsvorrichtung dahingehend vorgesehen ist, daß bei den häufigen, nicht unfallbedingten Blockierungen nach Überschreiten einer vorgegebenen Verzögerung von etwa 0,4 g eine erste Arretierung in Form einer schonenden Gurtbandklemmung durch hebelartiges Kippen eines federvorgespannten Umlenkelementes eintritt, das im Unfall ab einer höheren vorgegebenen Verzögerung von etwa 10 g in eine zweite Arretierung mit einer wirkungsvolleren Gurtbandklemmung zur sicheren und schlupffreien Lastaufnahme übergeht.

Eine erste Klemmeinrichtung für die ständigen Blockierungen gurtbandschonend in etwa gemäß der DE-PS-1 481 969 erfolgt jedoch mit verbesserten Hebelverhältnissen, die einen Reibbeiwert $\mu$ von etwa 0,5 erfordern. Nur im Unfall erfolgt durch den Bruch einer Sollbruchstelle ab einer vorbestimmten Belastung (etwa 4 kN Gurtzugskraft) ein Übergang in eine lastaufnehmende Klemmblockierung durch Verschwenken der Umlenkung in eine Position, bei der das Gurtband fest eingeklemmt wird. In dieser Stellung ist der Gurtabschnitt nach unten zum Aufroller völlig lastfrei. Es wirkt auf die Umlenkvorrichtung nur die Belastung vom Insassen, die ungefähr bei 8 kN liegt. Im Vergleich zu herkömmlichen Umlenkern liegt also nur ein Teil der Belastung vor, so daß eine entsprechend leichtere Dimensionierung sowohl des Beschlages als auch der Befestigungsstelle der Karosserie erfolgen kann.

Die ständigen Blockierungen mit geringer Belastung bei Bremsungen und Kurvenfahrt (über 0,4 g) erfolgen unverzüglich ohne nennenswerten Gurtbandauszug durch eine leichte Kippbewegung der Umlenkung gegen Klemmrippen (5) der Grundplatte. Diese Arretierung findet gurtbandschonend zwischen Kunststoff statt ohne Beschädigung des textilen Gewebes. Auch wird das Gurtband zur Blockierung nicht geknickt, wie z. B. in der DE-OS-2 348 654, so daß sich auch keine nachteilige Beeinflussung der Aufrollcharakteristik einstellt. Erst im Unfall erfolgt eine gurtbandverformende Einklemmung zur Sicherstellung einer schlupffreien, sicheren, lastaufnehmenden Blockierung.

Der Wegverlust (Gurtbandauszug) zur Einleitung der Blockierung bis zu einer Gurtauszugskraft von 10 kN beträgt bei dieser erfindungsgemäßen Umlenkvorrichtung nur 5 mm. Bei heutigen Umlenkern ohne Klemmvorrichtung zieht im Unfall incl. Filmspuleneffekt etwa 120 mm Gurtband aus, die entscheidend sein können, ob ein Kopfaufprall erfolgt oder nicht.

Gemäß einer vorteilhaften Weiterbildung ist für die erste Arretierung das Umlenkelement mit einem Hebelverhältnis größer als 2 so kippbar, daß zwei elastisch/plastisch verformbare Vorklemmflächen miteinander in Eingriff gelangen. Bei einer unfallbedingten größeren Verzögerung nach plastischer Verformung zumindest einer der verformbaren Vorklemmflächen bei entsprechender weiterer Lageveränderung des Umlenkelementes für die zweite Arretierung mit wirkungsvoller Gurtbandklemmung stehen zwei aggressivere Klemmflächen in Eingriff miteinander.

Gemäß einer speziellen Ausführungsform der Erfindung ist das Umlenkelement mit zwei Lagerzapfen vorgespannt und drehbar in zwei mit einer Grundplatte über eine Sollbruchstelle verbundenen Schwenkarmen gelagert.

Der Grundkörper des Umlenkelementes kann dabei aus einem Stanz- und Biegeteil als halbkreisförmiges Profil aufgebaut sein, von dem in axialer Richtung zwei Lagerarme ausgehen, sowie zwei nach oben abgewinkelte Begrenzungszapfen.

Um eine besonders wirksame Einklemmung des Gurtbandes bei einer unfallbedingten Verzögerung zu bewirken, sind die aggressiveren Klemmflächen von einem Bördel (L-förmige Ausbildung) und einem formschlüssig daran angepaßten Klemmteil gebildet. Dieser Bördel ist dabei an der Grundplatte befestigt und das Klemmteil wird vom Umlenkelement selbst gebildet und ist mit diesem so bewegbar, daß es mit dem L-förmigen Bördel in Eingriff gelangen kann.

Zweckmäßigerweise weisen die Schwenkarme einerseits eine runde Lagerbohrung zur Aufnahme der Lagerzapfen und andererseits eine Öffnung mit einem Schwenkbuckel auf, der in eine profilartig geprägte Halterung der Grundplatte eingreift.

Die Schwenkarme sind in ihrer Ausgangslage weitgehend waagerecht angeordnet und die Umlenkvorrichtung ist mit einer Neigung in Fahrtrichtung auf den Schulterpunkt des Insassen ausgerichtet und starr mit der Karosserie verbunden.

Zur Betätigung kann zwischen dem Umlenkelement und der Grundplatte ein Hubmagnet angeordnet sein, der auf elektrische Signale eines elektronischen Fahrzeugsensors und/oder Bremslichtschalters hin eine Hubbewegung zur Klemmeinleitung ausführt. Hinsichtlich einer zweckmäßigen konstruktiven Ausgestaltung kann der Grundkörper als Stanzbiegeteil zwei Begrenzungsflächen mit Bohrungen für eine Rollenachse aufweisen, sowie eine konkave Abstützfläche, zwei Stützrippen, eingeprägte Klemmflächen und eine untere Klemmfläche, wobei durch zwei Öffnungen eine Schwenkachse fest angeordnet ist. Dabei ist der Grundkörper mit einer reibungsarm drehenden Umlenkrolle ausgestattet. Dieser Grundkörper klemmt in einer ersten Arretierungsstufe mit runden, metallischen Klemmflächen gegen einen Hartgummistempel. In einer zweiten Arretierungsstufe erfolgt eine Klemmung mit einer unteren Klemmfläche gegen eine Klemmfläche eines Bördels der Grundplatte.

Es kann aber auch eine Klemmbacke federvorgespannt an der Grundplatte drehbar befestigt sein, so daß sich eine automatische Formanpassung der Klemmflächen einstellt. Zur Förderung der gegenseitigen Anpassung der Klemmflächen kann darüber hinaus das Umlenkelement mit seiner Drehachse in einem elastischen Lager gelagert sein.

Die Zweistufigkeit der Klemmwirkung kann sich dadurch einstellen, daß die Klemmflächen integriert als abgestufte Klemmflächen ausgebildet sind, indem auf einer aggressiven, gezahnten Klemmfläche eine flexible Haftschicht aufgebracht ist.

Zur konstruktiven Vereinfachung und Zusammenlegung der wichtigen Teile kann im Gehäuse der Umlenkvorrichtung ein Aufroller für das Gurtband integriert sein.

Außerdem ist es bevorzugt, den fahrzeugsensitiven Sensor selbst integriert in der Umlenkvorrichtung unterzubringen. Dabei kann ein bewegliches Sensorteil im drehbar am Fahrzeug angebrachten Umlenkelement so angeordnet sein, daß dieses Sensorteil auf ein Betätigungsglied einwirkt und dadurch das Betätigungsglied mit einer Greiffläche an das Gurtband anlegbar ist.

Das Betätigungsglied selbst kann als Schwenkhebel am Umlenkelement drehbar befestigt sein, so daß das Umlenkelement durch das Betätigungsglied mit der Klemmfläche auf das Gurtband zu bewegbar ist, wenn das Betätigungsglied selbst mit dem Gurtband in Eingriff gelangt ist.

Das Sensorglied kann in vorteilhafter Weise eine beweglich angeordnete Kugel sein.

In den Zeichnungen sind erfindungsgemäße Ausführungsformen dargestellt. Es zeigen:

Fig. 1a Die Umlenkvorrichtung in Ruhestellung;

Fig. 1b die Umlenkvorrichtung in Ruhe- und Blockierstellung;

Fig. 2 die Umlenkvorrichtung in Position: 1. Arretierung;

Fig. 3 die Umlenkvorrichtung in Position: 2. Arretierung;

Fig. 4 den Grundkörper der Umlenkung;

Fig. 5 die Umlenkung im Schnitt;

Fig. 6 eine alternative Bauform der Umlenkvorrichtung;

Fig. 7 eine Umlenkvorrichtung mit elektrischer Blockiereinleitung;

Fig. 8 eine Umlenkvorrichtung mit Umlenkrolle;

Fig. 9 den Grundkörper einer Umlenkvorrichtung gemäß Fig. 8;

Fig. 10 eine alternative Bauform der Umlenkvorrichtung im Nichtbetätigungszustand;

Fig. 11 die Bauform gemäß Fig. 10 im Betätigungszustand in der zweiten Arretierungsstufe;

Fig. 12 eine Schnittansicht durch die Klemmflächen;

Fig. 13 eine Schnittansicht einer alternativen Bauform der Klemmflächen;

Fig. 14 eine weitere alternative Bauform der Umlenkvorrichtung;

Fig. 15 eine Umlenkvorrichtung mit integriertem Aufroller;

Fig. 16 eine Umlenkvorrichtung mit integriertem Fahrzeugsensor;

Fig. 17 eine weitere alternative Bauform der Umlenkvorrichtung im Schnitt ohne Klemmzustand;

Fig. 18 die Umlenkvorrichtung gemäß Fig. 17 im unfallbedingten klemmzustand; und

Fig. 19 eine Teilquerschnittsansicht entlang der Linie XIX-XIX in Fig. 17.

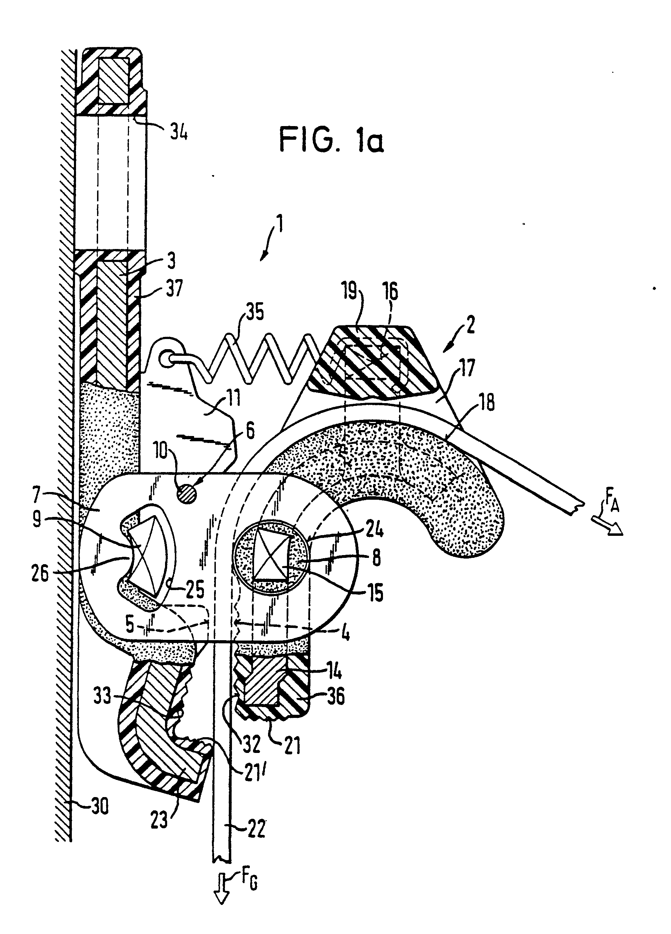

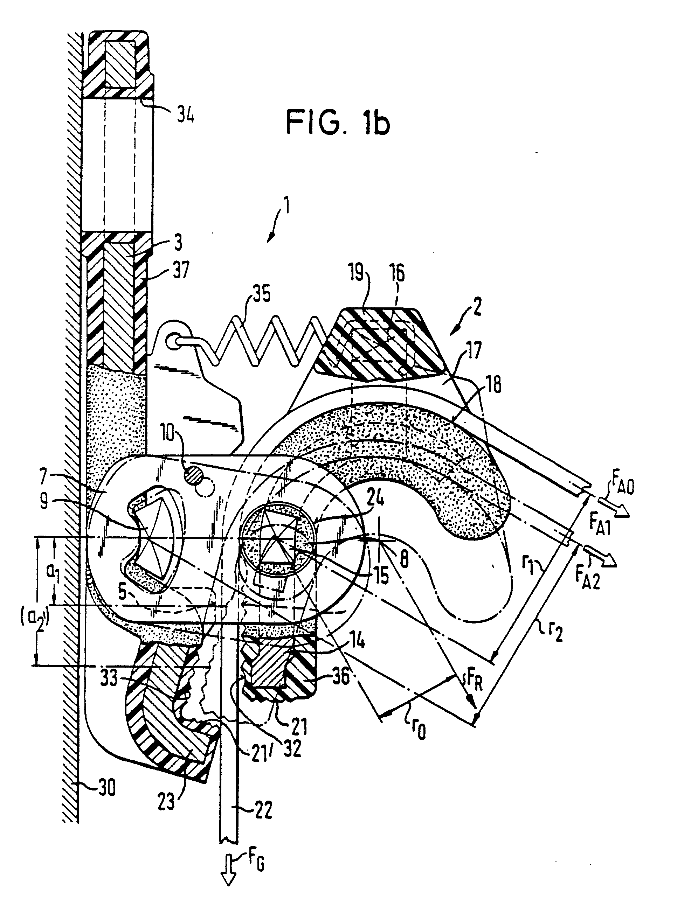

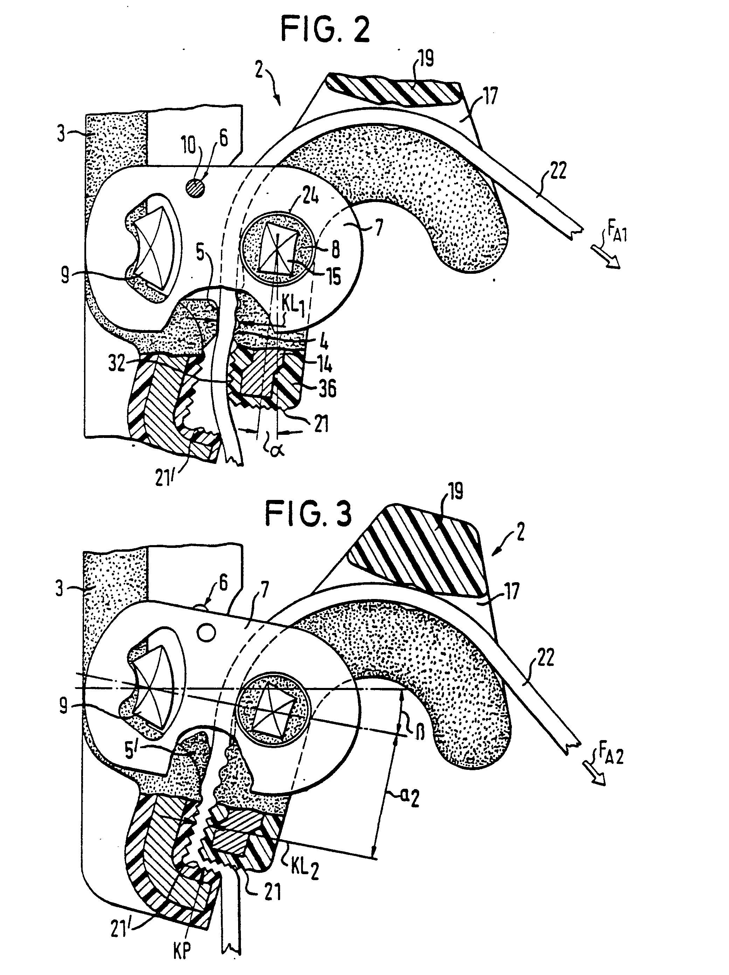

Die Fig. 1a zeigt eine Umlenkvorrichtung 1 für eine abgestufte Gurtbandklemmung in Ruhestellung. In die Fig. 1b ist die Endstellung mit hoher Belastung im Unfall strichpunktiert eingezeichnet. Ebenso sind die Kräfte- und Hebelverhältnisse dargestellt. Die abgestufte Gurtbandklemmung geht aus der Fig. 2 mit der häufig vorkommenden ersten Arretierung und aus Fig. 3 mit der zweiten Arretierung im Unfall hervor.

Eine Grundplatte 3 ist in üblicher Weise über eine Schraube durch eine Befestigungsbohrung 34 mit der Karosserie 30 verbunden. Ein Schwenkarm 7 ist über eine Halterung 9 und einen Sollbruchstift 10 starr mit der Grundplatte 3 verbunden. In einer Lagerbohrung 24 des Schwenkarmes 7 ist die Umlenkung 2 drehbar gelagert. Eine Zugfeder 35 hält die Umlenkung 2 gegen einen Anschlag in der dargestellten Ruhelage. Bewegt sich der Insasse nach vorne, wird das Gurtband 22 mit der Kraft $F_A$ gegen die

Kraft $F_G$ aus der Triebfeder im Aufroller ausgezogen. Bewegt sich der Insasse zurück, zieht der Aufroller mit der Kraft $F_G$ das Gurtband 22 zurück. Der Gesamtverband der beschriebenen Teile wirkt wie ein üblicher Umlenkbeschlag, der je nach Größe und Sitzposition des Insassen den Gurtauszug $F_A$ auf die Schulter ausrichtet. Die Stärke der Zugfeder 35 ist so ausgelegt, daß bis etwa 30 N die Ruheposition gemäß Fig. 1a beibehalten wird ($F_{A0}$ = 0 bis 30 N).

Im Falle einer auf das Fahrzeug einwirkenden Verzögerung beim Bremsen oder bei Kurvenfahrt von über 0,4 g und einer entsprechenden Bewegung des Insassen mit Gurtauszug tritt eine Gurtbandklemmung (1. Arretierung) gemäß Fig. 2 ein.

Ein Sensor im Aufroller blockiert die Wickelwelle und sperrt den Gurtauszug. Steigt aufgrund der Vorverlagerung des Insassen die Gurtauszugskraft $F_{A1}$ über 30 N an, kippt die Umlenkung 2 mit ihren Lagerzap fen 8 in der Lagerbohrung 24 rechtsdrehend und klemmt das Gurtband 22 zwischen den beiden Klemmflächen 4 und 5 ein.

Vor der Klemmung wirkt die Kraftresultierende $F_R$, die die Kippbewegung mit dem Kippwinkel $\alpha$ einleitet. Nach der Klemmung stellt sich ein Kräfteverhältnis von $F_{A1}$ x $r_1$ zu $KL_1$ x $a_1$ ein, das in der Zeichnung etwa 2,5 beträgt. Bei diesem Verhältnis ergibt sich ein erforderlicher Reibbeiwert $H\mu$ an der Klemmstelle 4/5 von 0,4. Dann gilt: Bei etwa 40 N kommt die Einklemmung des Gurtbandes zustande. Die Klemmkraft $KL_1$, beträgt dann 40 x 2,5 = 100 N. Bei $\mu$ = 0,4 können 40 N zurückgehalten werden. Aufgrund des Seilreibungseffektes zwischen Gurtband 22 und Umlenkfläche 18 werden sich ohnehin nur ca. 35 N an der Klemmstelle einstellen, was als Sicherheitsfaktor angesehen werden kann.

Eine sichere Klemmung des empfindlichen textilen Gewebes eines Gurtbandes mit dem Reibungsfaktor $\mu$ = 0,4 kann auf eine schonende Weise ermöglicht werden. Die Reibung zwischen Gurtbandmaterial (Polyester/Polyamid) und Gummi beträgt schon 0,7. Somit können sogar glatte Klemmflächen 4/5 zur Anwendung kommen, die das Gurtband 22 weder beschädigen noch verformen.

Auch Kunststoffumspritzungen 36 und 37 von Grundplatte 3 und Umlenkung 2 können an den Klemmflächen 4 und 5 der ersten Arretierung noch nahezu glattflächig ausgebildet werden, da der Reibbeiwert zu Kunststoff auch noch zwischen 0,35 und 0,4 liegt. Sicherheitshalber ist dann jedoch schon eine leichte , aber noch weiche Profilierung zumindest einer Klemmfläche vorzunehmen, wie es bei 4 dargestellt ist.

Bei dieser Form der Gurtbandblockierung im Umlenkbeschlag kommt niemals eine höhere Belastung als 40 N auf den Aufroller. Es ist ersichtlich, daß dieser nunmehr deutlich leichter und billiger und wohl auch kleiner hergestellt werden kann. Auch die Umlenkklemmvorrichtung 1 wird wesentlich geringer belastet, da nur die

Kraft $F_{A2}$ im Unfall zu übertragen ist. Bei einem konventionellen Umlenker wird diese Kraft als $F_G$ an den Aufroller weitergeleitet, so daß sich eine resultierende Kraft $F_R$ einstellt, die etwa 50 % größer ist als $F_A$.

Fig. 2 zeigt, daß zur Einleitung der ersten Arretierung nur ein kleiner Kippwinkel $\alpha$ erforderlich ist. Das bedeutet eine sofortige Gurtblockierung ohne nennenswerten Gurtauszug. Ein meßbarer Filmspuleneffekt oder eine meßbare Gurtdehnung zwischen Aufroller und Umlenker hat sich bis 40 N auch noch nicht eingestellt. Diese Form der Gurtblockierung ist abgesehen vom Gurtstrammer die effektivste nach dem heutigen Stand des Wissens.

Erreicht die Verzögerung des Fahrzeuges ein hohes Maß, so daß ein Unfall vorliegt, wird die Belastung $F_A$ ansteigen. Überschreitet sie einen vorgegebenen Wert, bricht der Sollbruchstift 10 und die Umlenkung 2 verändert - durch die Schwenkarme 7 geführt - ihre Position in eine Lage gemäß Fig. 3.

Nach der Verschwenkung mit dem Winkel $\beta$ liegen nunmehr folgende Kräfteverhältnisse vor:
$$F_{A2} \times r_2 = KL_2 \times a_2.$$
In der Zeichnung beträgt dieses Verhältnis immer noch 1,5, so daß ein Reibbeiwert $\mu$ von unter 1 für eine sichere Klemmung ausreichen würde. Da aber ein Unfall (mit anschließendem Gurtaustausch) vorliegt, können im Hinblick auf eine absolut sichere und schlupffreie Blockierung aggressive Klemmittel ($\mu$ größer 1) zur Anwendung kommen. Dies ist in den Zeichnungen durch spitze Klemmzähne an den Klemmflächen 32 und 33 dargestellt.

Als zusätzliche Sicherheit ergibt sich eine Gurtbandeinpressung zwischen den Flächen 21 und 21'. Die vorherige Klemmfläche 5', die vorzugsweise aus einer harten Gummimischung besteht, um das Gurtband 22 stempelartig in die profilierte Klemmfläche 4 zu drücken, wurde durch den Schwenkvorgang weitestgehend weggequetscht.

Die endgültige, lastaufnehmende Blockierung setzt sich also zusammen aus einer Klemmung des Gurtbandes ($F_{A2} \times a_2$) und einer Einpressung aus der abwärts gerichteten Komponente KP der Unfallast ähnlich wie bei einem Gurtversteller bei einem Statikgurt. Die Kraft KP wird abgefangen von einem Bördel 23 der Grundplatte 3.

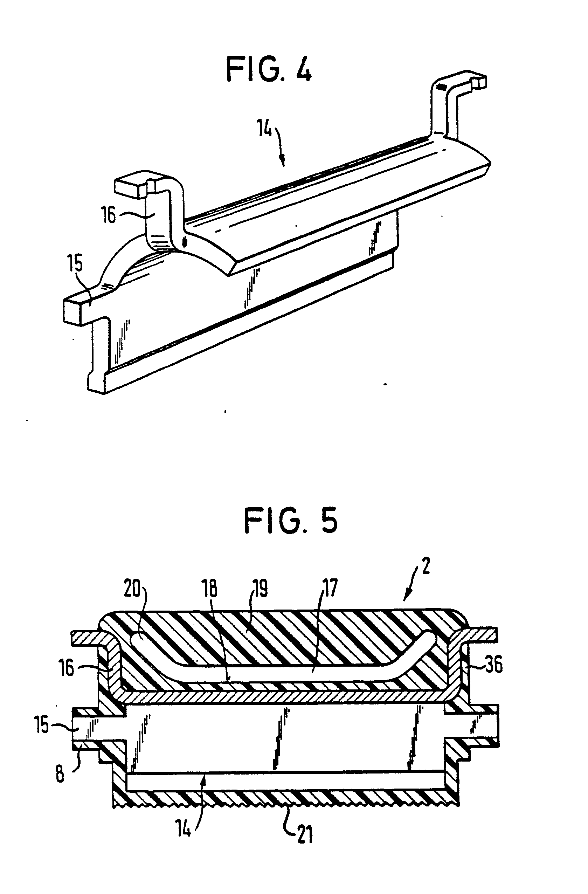

Der erfindungsgemäße Aufbau der Umlenkung 2 ergibt sich aus den Fig. 4 und 5. Der lastaufnehmende Grundkörper 14 ist als Halbrundprofil mit hohem Widerstandsmoment aufgebaut. Die Kunststoffumspritzung 36 gibt dem Umlenker 2 die funktionsgemäße Form. Die Lagerarme 15 sind als Lagerzapfen 8 umspritzt. Zwischen den Begrenzungszapfen 16 erstreckt sich der Gurtbandschlitz 17 mit den hochgezogenen Gurtbandausläufen 20. Zur Lagefixierung des Gurtbands dient das Dach 19. Diese Ausführungsform ist funktionsgerecht, kostengünstig und aufgrund der Gestaltungsvorteile auch leicht ausführbar.

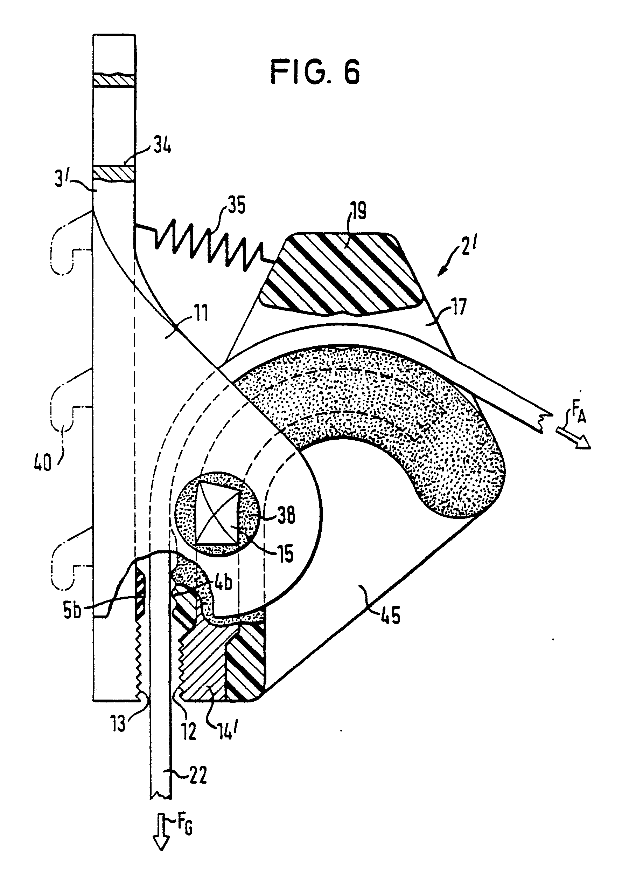

Fig. 6 zeigt eine vereinfachte Ausführungsform der erfindungsgemäßen Idee mit einer ersten gurtbandschonenden Arretierung für die häufig auftretenden Blockierungen mit kleinen Kräften $F_{A1}$ und einer zweiten aggressiven Arretierung im Unfall zur Aufnahme der max. Belastung $F_{A2}$.

Der einfachere Aufbau kann dadurch erreicht werden, indem auf die zusätzliche Blockierung zwischen den Klemmflächen 21 und 21' verzichtet wird.

Ähnlich wie bei der ersten Ausführung erfolgt die erste Arretierung zwischen weichen Klemmflächen 4b und 5b, wobei 5b sinnvollerweise ein glattflächiger Hartgummieinsatz ist, der das Gurtband 22 stempelartig in die weich profilierte Klemmfläche 4b drückt.

Bei unfallartig ansteigender Last $F_A$ erfolgt hier kein schlagartiger (Sollbruchstelle) Übergang in die zweite Arretierung, sondern ein allmählicher. Durch plastische/elastische Verformung der Klemmflächen 4b und 5b kommen die direkt aus dem Grundkörper 14' und der Grundplatte 3' geprägten, spitzen Zähne 12 und 13 mehr und mehr zum Eingriff, bis der gesamte Klemmbereich zum Tragen kommt.

Für eine starre Verbindung der Grundplatte 3' mit der Karosserie 30 gemäß Anspruch 13 sind strichpunktiert Krallen 40 gezeigt, die in entsprechende Halteöffnungen eingreifen und die Last direkt, ohne zusätzliche Befestigungselemente, übertragen.

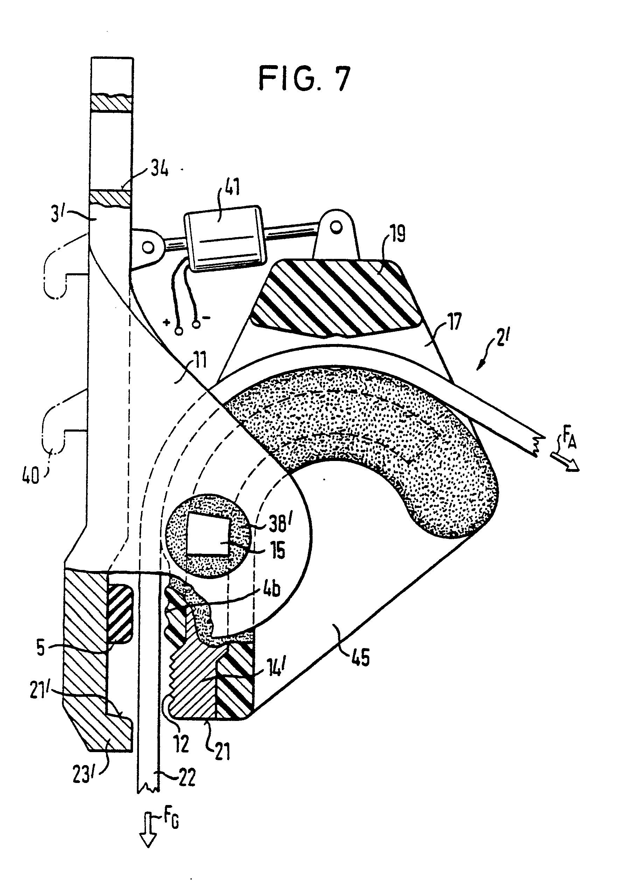

In Fig. 7 ist die abgestufte Klemmung in einer vereinfachten Ausführungsform ähnlich wie bei Fig. 1 mit einem zusätzlichen Bördel 23' der Grundplatte 3' dargestellt. Die erste Arretierung erfolgt über weich verrundete Klemmflächen 4b gegen einen Hartgummistempel 5. Bei Lastanstieg verschwenkt die Umlenkung 2', so daß das Gurtband 22 zwischen die Klemmflächen 21 und 21' gerät. Bei noch weiterem Lastanstieg verformt sich die Lagerbuchse 38', so daß eine ähnliche Klemmkraft KP wie in Fig. 3 entsteht, die sicher und schlupffrei wirkt.

Des weiteren ist in Fig. 7 ein Hubmagnet 41 statt der Zugfeder 35 dargestellt. In Ruheposition zieht er die Umlenkung 2' zurück. Bei elektrischer Aktivierung durch einen Fahrzeugsensor und/oder den Bremslichtschalter stößt er die Umlenkung 2' in Klemmposition, so daß die erste Arretierung eingeleitet wird.

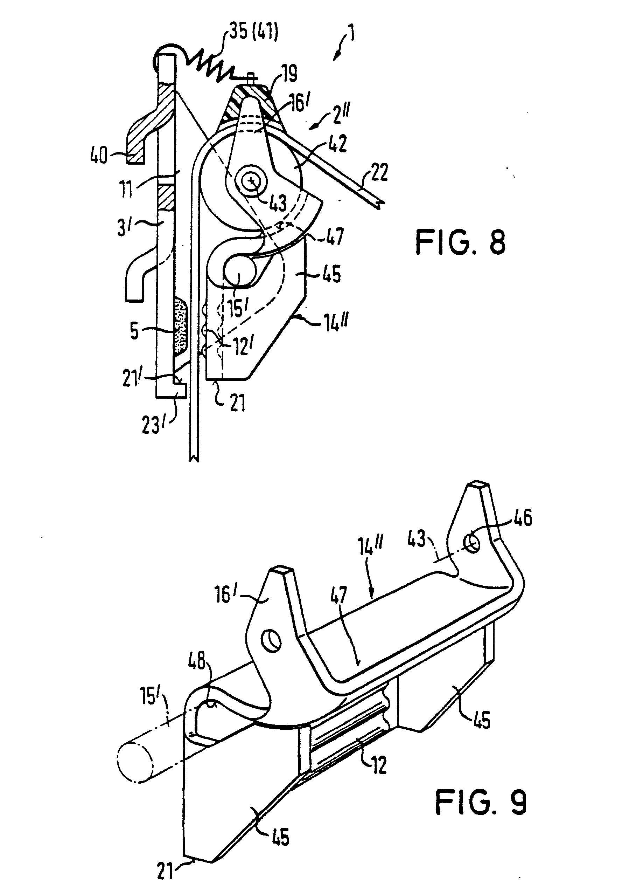

Fig. 8 zeigt eine Umlenkung 2'' mit einer reibungsarm wirkenden Gurtbandumlenkung durch eine Rolle 42, die in Begrenzungsflächen 16' eines Grundkörpers 14'' gelagert ist. Die Kunststoffumspritzung des Grundkörpers 14'' ist nur teilweise mit dem Dach 19 dargestellt. Die Schwenkung gegen die Feder 35 (bzw. durch den Hubmagneten 41) erfolgt über eine Schwenkachse 15', die fest mit dem Grundkörper 14'' verbunden ist. Sie wird in die Öffnungen 48 eingeklemmt und anschließend zusammen mit dem Grundkörper 14'' umspritzt. Unter Last kann sich die Umlenkrolle 42 in eine konkav gebogene Abstützfläche 47 hineinbiegen. Um die Lastübertragung der zweiten Arretierung verformungsarm zu gestalten, sind zwei Stützrippen 45 vorgesehen.

Bei Anordnung der Umlenkvorrichtung 1 in einer Ausbuchtung der B-Säule gemäß DE-PS-3 104 598 mit Ausrichtung auf die Schulter des Insassen kann auf eine Schwenkbarkeit um eine Hochachse, wie sie in der DE-PS-2 420 848 vorgeschlagen wird, verzichtet werden. Die Gesamtausführung wird dadurch leichter und billiger, wenn für den Lasttransfer Krallen 40 aus oder Grundplatte 3 gebildet werden, die in entsprechende Öffnungen des Karosserieblechs eingreifen (bzw. umgekehrt Krallen des Kfz-Bleches in entsprechende Öffnungen der Grundplatte).

Bei der Umlenkvorrichtung gemäß Fig. 8 erfolgt die erste Arretierung des Gurtbandes 22 zwischen einer weich verrundeten, metallenen Klemmfläche 12' gegen einen Kunststoffstempel 5 und die zweite Arretierung entsprechend Fig. 7.

Fig. 9 schließlich zeigt den Grundkörper 14" der Umlenkung 2" als Biegestanzteil. Die vorteilhafte Steifheit der Konstruktion wird deutlich.

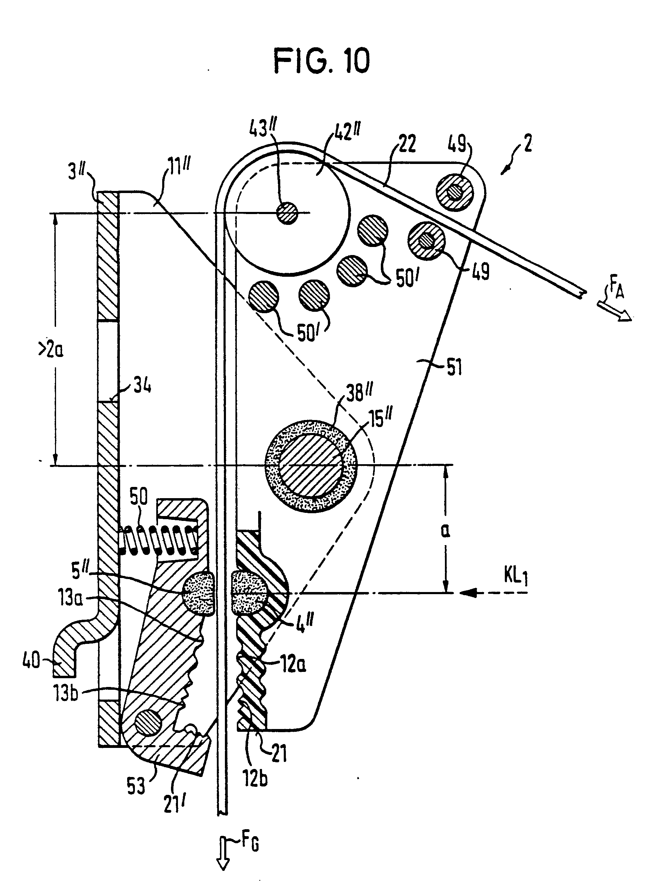

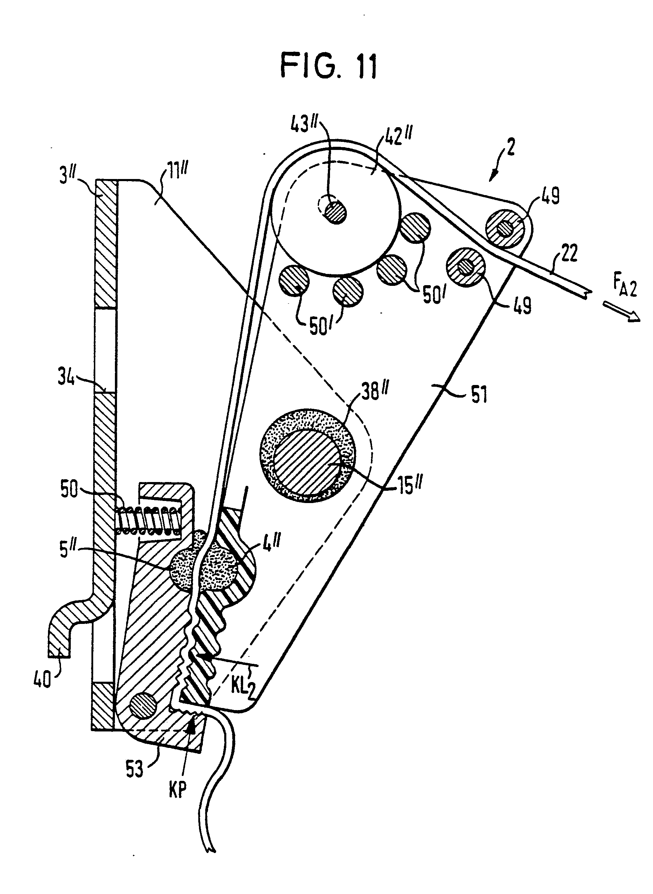

Eine Alternative zur Ausführung gemäß Fig. 8 und 9 stellt der Umlenkklemmer gemäß Fig. 10 und 11 dar. Der konstruktive Aufbau der Teile ist anders gewählt und die Gurtbandklemmung erfolgt gegen eine bewegliche Klemmbacke 53, die in der Grundplatte 3" drehbar gelagert ist, und zwar gegen die Wirkung einer Druckfeder 50. Es kann eine sehr starke Druckfeder 50 zum Einsatz kommen, um in der Klemmzone 1 (bis 500 N) als starre Backe zu wirken. Erst in der Klemmzone 2 (ab 500 N) setzt eine Bewegung der Klemmbacke 53 ein, so daß zunächst die runden Zähne 12a und 13a der Klemmflächen zum Einsatz gelangen. Erst in der Klemmzone 3 (ab 2 KN) erfolgt durch weiteres Wegklappen der Klemmbacke 53 auch die Aktivierung der scharfen Verzahnung 12b und 13b bis zum Klemmen der unteren Klemmflächen 21, 21' und im Endzustand, wie Fig. 11 zeigt. Hierbei erfolgt eine Verschiebung im Lager 38" abwärts, so daß zusätzlich zur Klemmkraftkomponente $KL_2$ die Komponente KP entsteht, die einen Schlupf des Gurtbandes ausschließt.

Eine Umlenkrolle 42" hat sich unter Last abwärts verlagert und stützt sich gegen die Stützachsen 50' ab. Das Gurtband 22 verläuft durch zwei Führungsrollen 49, so daß es sauber auf die Umlenkrolle 42" geführt wird und auch nicht umklappen kann. Diese Führungsrollen haben die gleiche Funktion wie das Dach in den vorigen Figuren.

Für die erste Klemmzone sind die flexiblen Klemmpolster 4" und 5" vorgesehen. Dabei befindet sich das Klemmpolster 4" zusammen mit dem flexiblen Klemmflächeneinsatz 21 auf einem Schwenkträger 51, welcher die Umlenkrolle 42", Gurtbandführungsrollen 49 und die Stützachsen 50' trägt und dabei sich über die flexible Lagerbuchse 38" auf der Drehachse 15" abstützt. Dabei besteht ein wirksamer Hebelabstand zwischen dem Klemmpolster 4" und der Drehachse 15", sowie ein wirksamer Hebelarm zwischen dieser Drehachse 15" und der Achse 43" der Umlenkrolle 42", welcher Abstand größer 2a sein soll. Die Drehachse 15" sitzt darüber hinaus in zwei Halteplatten 11", die an der Grundplatte 3" befestigt sind.

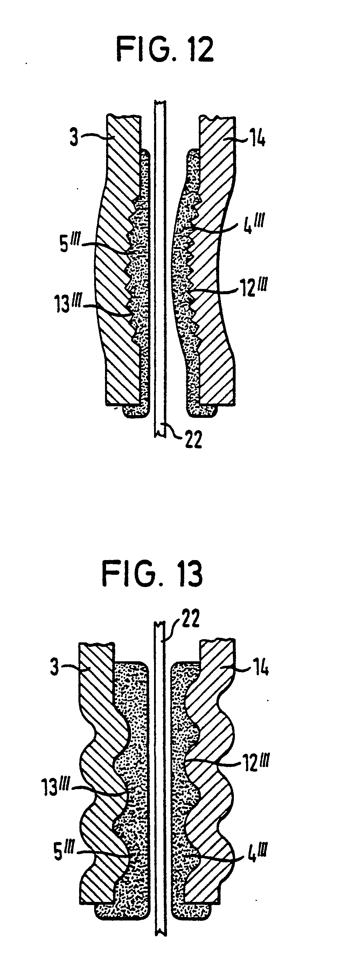

In Fig. 12 und 13 sind andere Möglichkeiten der abgestuften Gurtbandklemmung dargestellt. Hier sind die verschiedenen Klemmflächen integriert ausgebildet. Hierzu weisen die Grundkörper 3, 3' und 14 bereits die Verzahnung 12''' und 13''' auf. Die Verzahnung ist einmal spitz verzahnt (Fig. 12) und einmal grob rund verzahnt (Fig. 13). Die Verzahnungen sind mit einer flexiblen Haftschicht 4''', 5''' überdeckt, und zwar bevorzugt mit einer Gummimischung übervulkanisiert. In der Klemmzone 1 wird das Gurtband 22 nur von der Haftschicht 4''', 5''' festgehalten. Der Übergang in die anderen Klemmzonen bei Lastanstieg erfolgt kontinuierlich, bis in Klemmzone 3 eine formschlüssige Verzahnung des Gurtbandes vorliegt.

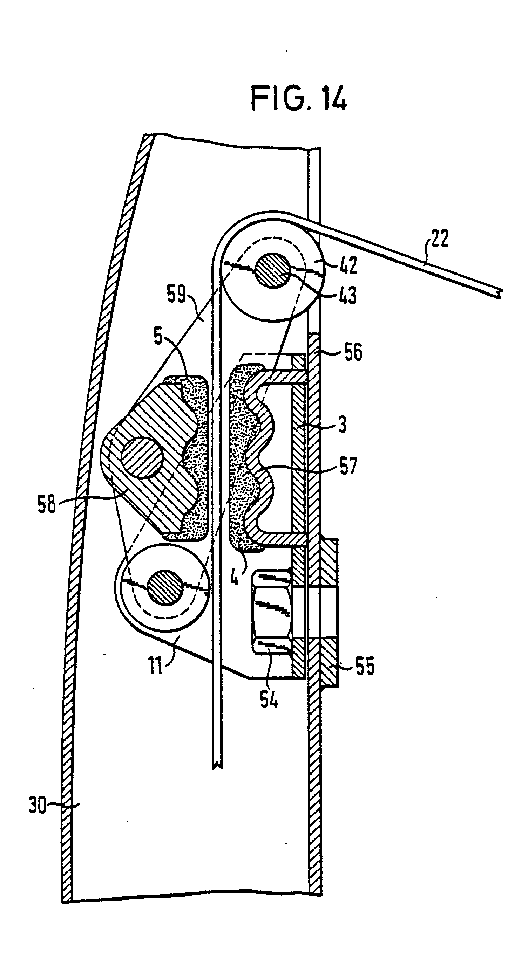

Fig. 14 zeigt einen Umlenkklemmer, dessen Ausführung für den Einbau in die B-Säule 30 geeignet ist. Die Gurtbandklemmung erfolgt zwischen zwei Klemmbacken 57 und 58 ähnlich der Fig. 13, wobei eine beweglich ist und sich flächig angleichen kann. Zwei Träger 59 sind neben Schenkeln 11 innerhalb eines Gehäuses 3 angeordnet. Eine an sich vorhandene Rückstellfeder ist in dieser Zeichnung nicht dargestellt. Die Klemmbacken weisen ebenfalls eine abgerundete Verzahnung mit einer übervulkanisierten Klemmfläche 4, 5 auf, wobei das Gehäuse 3 mittels einer Mutter 54 und einer Platte 55 an der Grundplatte 56 der B-Säule 30 befestigt ist.

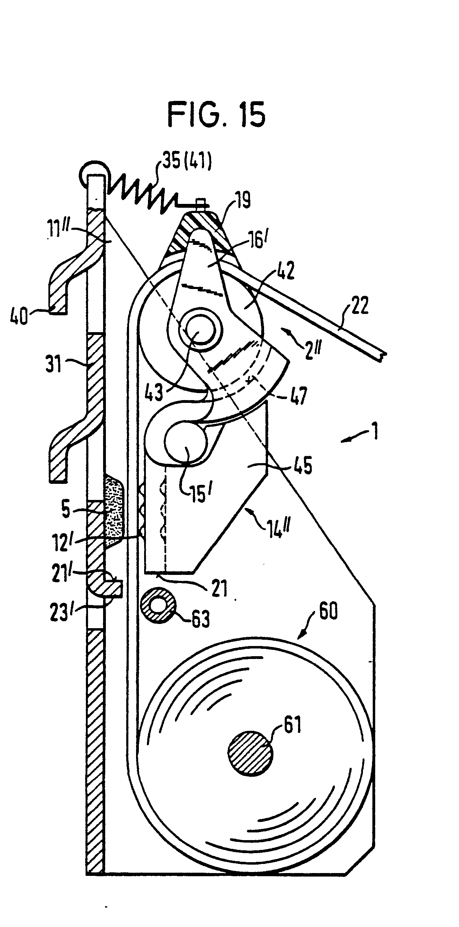

Fig. 15 zeigt eine Ausführungsform ähnlich der Fig. 8, jedoch mit dem Unterschied, daß eine Umlenkführung 63 vorgesehen ist und in das Gehäuse des Umlenkklemmers ein Aufroller 60 eingebaut ist, welcher auf einer Wickelwelle 61 abgestützt ist. Die Wickelwelle des Aufrollers ist mit einer nicht dargestellten Gurtstrammeinheit kuppelbar. Zwischen dem Umlenker 2, 2" und dem Aufroller 60 befindet sich noch ein Führungselement 63.

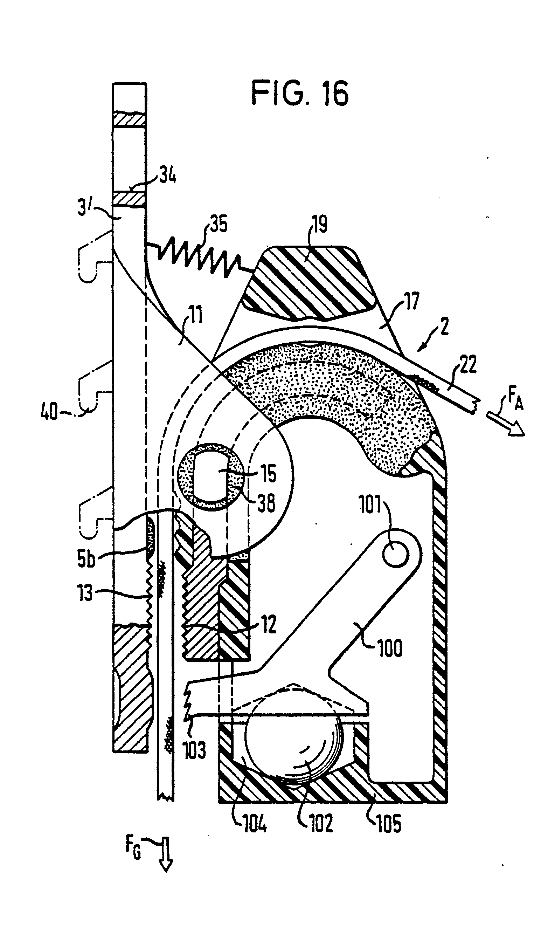

Fig. 16 zeigt einen Umlenker ähnlich wie in Fig. 1a, jedoch mit dem Unterschied, daß die feste Klemmfläche mit der Verzahnung 13 von der Grundplatte 3' selbst gebildet ist und daß an der Grundplatte oberhalb dieser Verzahnung die Vorklemmfläche 5b angeordnet ist. Ein wesentlicher Unterschied zur Fig. 1a ist aber der integrierte Einbau eines Fahrzeugsensors 105 in Form einer Kugel 102, welche beweglich in einem Käfig 104 angeordnet ist. Diese Kugel steht in Berührung mit einem als Schwenkhebel 100 ausgebildeten Betätigungsglied, welcher Schwenkhebel um die Achse 101 schwenkbar ist. An dem Gurtband 22 zugewandten Ende dieses Schwenkhebels befindet sich eine verzahnte Greiffläche 103.

Die gurtbandsensitive Blockiereinleitung kann über die Feder 35 bewerkstelligt werden. Sie ist dann nicht nur eine Rückstellfeder, sondern auch eine sogenannte G-Wert-Feder ( = Sensorfeder)

Wird der Gurtauszug bei $F_A$ stark beschleunigt, z. B. oberhalb 1 g, so steigen die Trägheitskräfte in dem unterhalb des Umlenkklemmers angeordneten Gurtspeicher ( = Aufroller ohne Blockierfunktion) an. Daraus resultiert eine Gegenkraft $F_G$ im Gurtband. Aufgrund der Kräftegleichgewichte kippt die Umlenkung 2 gegen die Kraft der Feder 35 im Uhrzeigersinn und es wird eine Blockierung eingeleitet, zunächst eine Vorblockierung bei 5b, die bei ansteigender Last in eine Klemmblockierung zwischen 12 und 13 übergeht.

Die fahrzeugsensitive Blockiereinleitung erfolgt bei Überschreiten einer Verzögerung des Fahrzeuges ab 0,40 g. Dabei wird die Sensorkugel 102 ausgelenkt, so daß der als Sperrhebel wirkende Schwenkhebel 100 mit seiner gezahnten Greiffläche 103 gegen das Gurtband geschwenkt wird. Aufgrund des sich einstellenden Eingriffswinkels erfolgt eine leichte Klemmblockierung, die einem Gurtauszug entgegenwirkt. Tritt nun bei ausgelenktem Schwenkhebel 100 ein Gurtauszug $F_A$ auf, so wird die Umlenkung 2 gegen die Feder 35 sofort verschwenkt, so daß eine Vorblockierung bei 5b einsetzt.

Statt der gezahnten Greiffläche 103 kann auch eine mit einem reibintensiven Belag versehene Greiffläche zum Einsatz gelangen.

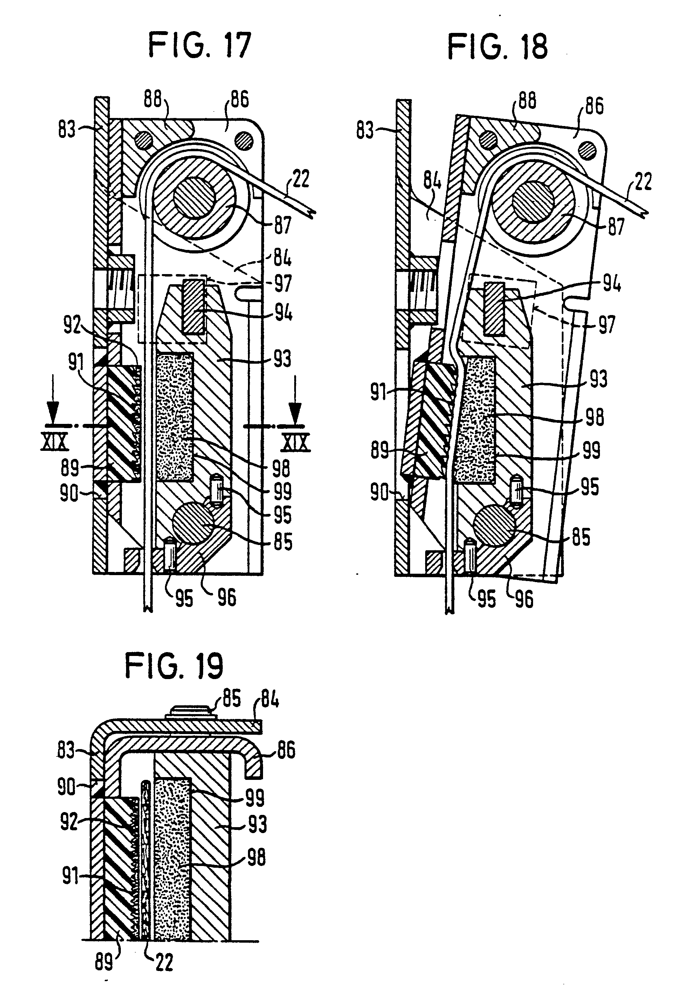

Eine solche Vorrichtung auf rein mechanischer Basis ohne Hilfsenergie (z. B. elektrisch mit Hubmagnet 41 gemäß Fig. 7) stellt ein Optimum an Schutzwirkung innerhalb eines Sicherheitsgurtes dar. Es ergibt die absolut kürzesten Gurtauszüge ohne Filmspuleneffekt, d.h. die geringsten Vorverlagerungen beim Unfall. Bei der Ausführungsform gemäß Fig. 17, 18 und 19 ist eine Grundplatte 83 U-förmiger Gestalt mit zwei Schenkeln 84 vorgesehen. Zwischen den Schenkeln 84 sitzt ein Schwenkbolzen 85. Auf diesem Schwenkbolzen sitzt ein Schwenkgehäuse 86, an dessen oberem Ende eine Umlenkrolle 87 drehgelagert angebracht ist. Gegenüber dieser Umlenkrolle, dort, wo das Gurtband 22 anliegt, befindet sich eine Gurtbandführung 88.

Das Schwenkgehäuse 86 ist im unteren Bereich auf die Grundplatte 83 hin mit einer beweglichen Klemmbacke 89 versehen. Diese Klemmbacke liegt in der in Fig. 17 dargestellten Ausgangslage an der Grundplatte 83 an und ragt teilweise dabei in eine in der Grundplatte 83 befindliche Öffnung 90. Die bewegliche Klemmbacke 89 ist mit einer verzahnten Klemmfläche 91 versehen. Diese verzahnte Klemmfläche 91 von einer elastisch und/oder plastisch verformbaren Reibschicht 92 bedeckt.

Gegenüber der beweglichen Klemmbacke 89 befindet sich eine unbewegliche Klemmbacke 93, die ebenfalls auf dem Schwenkbolzen 85 sitzt und an der gegenüberliegenden Seite durch eine Haltestange 94 gehalten wird. Die in diese unbewegliche Klemmbacke eingeleiteten Kräfte werden von der Haltestange 94 und dem Schwenkbolzen 85 aufgenommen. Am unteren Ende der unbeweglichen Klemmbacke 93 ist mittels Befestigungsstiften 95 ein Führungsteil 96 für das Gurtband 22 aufgesetzt. Um eine Bewegung des Schwenkgehäuses 86 trotz des Vorhandenseins der Haltestange 94 zu gewährleisten, befindet sich im Schwenkgehäuse auf beiden Seiten eine rechteckige Öffnung 97.

Gegenüber der Klemmbacke 89 befindet sich ein Reibpolster 98, welches sich in einer Ausnehmung 99 der festen Klemmbacke 93 befindet.

In Fig. 17 ist die normale Betriebslage ohne Klemmungszustand dargestellt. Die Führungsteile 88 und 96 gewährleisten, daß das Gurtband 22 frei zwischen den Klemmflächen der Klemmbacken 89 und 93 laufen kann, wenn unter entsprechenden Bedingungen das Gurtband über die Umlenkrolle 87 abgezogen wird.

In Fig. 18 ist der Klemmzustand dargestellt, in dem das Schwenkgehäuse 86 in seine äußerst rechte Lage geschwenkt ist, in der die Reibschicht 92 überwunden ist und die Greifzähne 91 in das Gurtband 22 greifen. In diesem Zustand ist auch das Reibpolster 98 so weit deformiert, daß die bewegliche Klemmbacke 89 das Gurtband am oberen Ende etwas in die Ausnehmung 99 der unbeweglichen Klemmbacke 93 drückt, wo das Gurtband über eine kurze Strecke eine scharfe Umlenkung erfährt, was zu einer Erhöhung der Klemmkraft führt.

Diese Ausführungsform stellt eine besonders einfache und zweckmäßige konstruktive Gestaltung des allgemein beschriebenen Umlenkklemmers dar.

Es ist noch festzustellen, daß der Reibbelag 92 entweder die gesamte Klemmfläche der beweglichen Klemmbacke einnehmen kann. Es besteht allerdings auch die Möglichkeit, einen schmalen Streifen über die gesamte Höhe der Klemmfläche anzubringen.

## Patentansprüche

1. Umlenkvorrichtung für einen Sicherheitsgurt zur vorzugsweisen Anbringung an den B- und C-Säulen von Kraftfahrzeugen mit Mitteln zur direkten Blockierung des Gurtbandes (22) durch Klemmen und zur Aufnahme der Belastung in einem Unfall, dadurch gekennzeichnet, daß eine zweistufige Arretierungsvorrichtung dahingehend vorgesehen ist, daß bei den häufigen, nicht unfallbedingten Blockierungen nach Überschreiten einer vorgegebenen Verzögerung eine erste Arretierung in Form einer schonenden Gurtbandklemmung (5, 5', 5'', 5''') durch hebelartiges Kippen eines federvorgespannten oder durch einen Hubmagneten betätigten Umlenkelementes (2) eintritt, das im Unfall ab einer höheren vorgegebenen Verzögerung in eine zweite Arretierung mit einer Gurtbandklemmung (12, 13; 32, 33) zur schlupffreien Lastaufnahme übergeht.

2. Umlenkvorrichtung nach Anspruch 1, dadurch gekennzeichnet, daß für die erste Arretierung das Umlenkelement (2) mit einem Hebelverhältnis größer 2 so kippbar ist, daß zwei elastisch/plastisch verformbare Vorklemmflächen (4, 5) miteinander in Eingriff gelangen.

3. Umlenkvorrichtung nach Anspruch 1, dadurch gekennzeichnet, daß bei einer unfall bedingten größerem Verzögerung nach plastischer Verformung zumindest einer der verformbaren Vorklemmflächen bei entsprechender weiterer Lageveränderung des Umlenkelementes (2) für die zweite Arretierung mit wirkungsvollen Gurtbandklemmung (höhere Reibung, größere Gurtbandumschlingung, größere Gurtklemmkraft) zwei aggressivere Klemmflächen (21, 21', 32, 33) in Eingriff miteinander stehen.

4. Umlenkvorrichtung nach Anspruch 1, dadurch gekennzeichnet, daß das Umlenkelement (2) mit zwei Lagerzapfen (8) federvorgespannt und drehbar in zwei mit einer Grundplatte (3) über eine Sollbruchstelle (6) verbundenen Schwenkarmen (7) gelagert ist (Fig. 1a).

5. Umlenkvorrichtung nach Anspruch 1, dadurch gekennzeichnet, daß der Grundkörper (14) des Umlenkelementes (2) aus einem Stanz- und Biegeteil als halbkreisförmiges Profil aufgebaut ist, von dem in axialer Richtung zwei Lagerarme (15) ausgehen, sowie zwei nach oben abgewinkelte Begrenzungszapfen (16) (Fig. 4).

6. Umlenkvorrichtung nach Anspruch 3, dadurch gekennzeichnet, daß die aggressiveren Klemmflächen von einem Bördel (23) und einem formschlussig daran angepaßten Klemmteil (21) gebildet sind.

7. Umlenkvorrichtung nach den Ansprüchen 4 und 6, dadurch gekennzeichnet, daß der Bördel (23) an der Grundplatte (3) befestigt und das Klemmteil (21) vom Umlenkelement (2) gebildet ist.

8. Umlenkvorrichtung nach den vorangegangenen Ansprüchen, dadurch gekennzeichnet, daß die Schwenkarme (7) einerseits eine runde Lagerbohrung (24) zur Aufnahme der Lagerzapfen (8) aufweisen und andererseits eine Öffnung (25) mit einem Schwenkbuckel (26), der in eine profilartig geprägte Halterung (9) der Grundplatte (3) eingreift.

9. Umlenkvorrichtung nach den vorangegangenen Ansprüchen, dadurch gekennzeichnet, daß die Schwenkarme (7) in ihrer Ausgangslage weitgehend waagerecht angeordnet sind.

10. Umlenkvorrichtung nach den vorangegangenen Ansprüchen, dadurch gekennzeichnet, daß die Umlenkvorrichtung mit einer Neigung in Fahrtrichtung auf den Schulterpunkt der Insassen ausgerichtet und starr mit der Karosserie verbunden ist.

11. Umlenkvorrichtung nach den vorangegangenen Ansprüchen, dadurch gekennzeichnet, daß der Hubmagnet (41) zwischen Umlenkelement (2) und Grundplatte (3) integriert ist und auf elektrische Signale eines elektronischen Fahrzeugsensors und/oder Bremslichtschalters hin eine Hubbewegung zur Klemmeinleitung ausführt (Fig. 7).

12. Umlenkvorrichtung nach den vorangegangenen Ansprüchen, dadurch gekennzeichnet, daß ein Grundkörper (14") als stanzbiegeteil zwei Begrenzungsflächen (16') mit Bohrungen (46) für eine Rollenachse (43) aufweist, sowie eine konkave Abstützfläche (47); zwei Stützrippen (45), eingeprägte Klemmflächen (12) und eine untere Klemmfläche (21), und daß durch zwei Öffnungen (48) eine Schwenkachse (15') fest angeordnet ist (Fig. 8, 9).

13. Umlenkvorrichtung nach Anspruch 18, dadurch gekennzeichnet, daß der Grundkörper (14") mit einer reibungsarm drehenden Umlenkrolle (42) ausgestattet ist, in einer ersten Arretierungsstufe mit runden, metallenen Klemmflächen (12') gegen einen Hartgummistempel (5) klemmt und in einer zweiten Arretierungsstufe mit einer unteren Klemmfläche (21) gegen eine Klemmfläche (21') eines Bördels (23') der Grundplatte (3') (Fig. 8, 9).

14. Umlenkvorrichtung nach Anspruch 1, dadurch gekennzeichnet, daß eine Klemmbacke (53) federvorgespannt an der Grundplatte (3") befestigt ist (Fig. 10, 11).

15. Umlenkvorrichtung nach einem der vorhergehenden Ansprüche, dadurch gekennzichnet, daß das Umlenkelement mit seiner Drehachse (15") in einem elastischen Lager (38") gelagert ist.

16. Umlenkvorrichtung nach einem der vorhergehenden Ansprüche, dadurch gekennzeichnet, daß die Klemmflächen integriert als abgestufte Klemmflächen ausgebildet sind, indem auf einer aggressiven, gezahnten Klemmfläche (12''', 13''') eine flexible Haftschicht (4''', 5''') aufgebracht ist (Fig. 12, 13).

17. Umlenkvorrichtung nach einem der vorhergehenden Ansprüche, dadurch gekennzeichnet, daß im Gehäuse (31) dieser Umlenkvorrichtung ein Aufroller (60) für das Gurtband integriert ist (Fig. 15).

18. Umlenkvorrichtung nach Anspruch 1, dadurch gekennzeichnet, daß ein fahrzeugsensitiver Sensor in die Umlenkvorrichtung integriert ist.

19. Umlenkvorrichtung nach Anspruch 18, dadurch gekennzeichnet, daß ein bewegliches Sensorteil (102) im drehbar am Fahrzeug angebrachten Umlenkelement (2) so angeordnet ist, daß dieses Sensorteil (102) auf ein Betätigungsglied (100) einwirkt und dadurch das Betätigungsglied (100) mit einer Greiffläche (103) an das Gurtband (22) anlegbar ist.

20. Umlenkvorrichtung nach Anspruch 19, dadurch

gekennzeichnet, daß das Betätigungsglied (103) als Schwenkhebel am Umlenkelement (2) drehbar befestigt ist und das Umlenkelement (2) durch das Betätigungsglied mit der Klemmfläche (12) auf das Gurtband (22) zu bewegbar ist, wenn das Betätigungsglied (103) selbst mit dem Gurtband (22) in Eingriff gelangt ist.

21. Umlenkvorrichtung nach den Ansprüchen 18 bis 20, dadurch

gekennzeichnet, daß das Sensorglied (102) eine Kugel ist.

22. Umlenkvorrichtung nach Anspruch 1, dadurch

gekennzeichet, daß auf einem fahrzeugseitig befestigten Schwenkzapfen (85) eine unbewegliche Klemmbacke (93) und zusammen mit einer Umlenkrolle (87) eine bewegliche Klemmbacke (89) sitzt, daß eine Klemmbacke (89) mit einer durch eine verformbare Masse (92) abgedeckten verzahnten Klemmfläche (91) versehen ist und die andere Klemmbacke (93) ein eine Klemmfläche bildendes verformbares Klemmpolster (98) aufweist, das in einer Ausnehmung (99) sitzt.


**Claims**

1. Guide mechanism for a safety belt preferably for mounting on the middle and rear pillars of motor vehicles, with means for direct locking of the belt webbing (22) by clamping and for absorbing the load in an accident, characterised in that a two-stage locking device is provided to the effect that in the frequent instances of locking not caused by an accident after exceeding a given deceleration a first locking stage occurs in the form of non-aggressive clamping (5, 5', 5'', 5''') of the webbing by lever-like tilting of a spring-biassed or solenoid-operated guide element (2), which in an accident above a higher predetermined deceleration changes to a second locking stage with clamping (12, 13; 32, 33) of the webbing for absorbing the load without slip.

2. Guide mechanism according to claim 1, characterised in that for the first locking stage the guide element (2) can be tilted with a leverage of more than 2 in such a way that two elastically/plastically deformable preclamping surfaces (4, 5) engage with each other.

3. Guide mechanism according to claim 1, characterised in that in the event of greater deceleration caused by an accident, after plastic deformation of at least one of the deformable preclamping surfaces with a corresponding additional change of position of the guide element (2) for the second locking stage with effective clamping of the webbing (higher friction, greater belt wrap, greater belt clamping force) two more aggressive clamping surfaces (21, 21', 32, 33) engage with each other.

4. Guide mechanism according to claim 1, characterised in that the guide element (2) is mounted by two bearing pins (8) with spring bias and rotatably in two pivot arms (7) which are connected to a base plate (3) by a rated break point (6) (Fig. 1a).

5. Guide mechanism according to claim 1, characterised in that the main body (14) of the guide element (2) is formed from a stamped and bent component as a semicircular profile from which two bearing arms (15) extend in an axial direction, as well as two upwardly angled limit pins (16) (Fig. 4).

6. Guide mechanism according to claim 3, characterised in that the more aggressive clamping surfaces are formed by a flange (23) and a clamping portion (21) adapted thereto in form-fitting relationship.

7. Guide mechanism according to claims 4 and 6, characterised in that the flange (23) is attached to the base plate (3) and the clamping portion (21) is formed by the guide element (2).

8. Guide mechanism according to any of the preceding claims, characterised in that the pivot arms (7) on the one hand comprise a round bearing bore (24) for receiving the bearing pins (8) and on the other hand an opening (25) with a pivot boss (26) which engages in a profiled support (9) of the base plate (3).

9. Guide mechanism according to any of the preceding claims, characterised in that the pivot arms (7) in their starting position are arranged largely horizontally.

10. Guide mechanism according to any of the preceding claims, characterised in that the guide mechanism is aligned with an inclination in the direction of travel towards the shoulder point of the passenger, and rigidly connected to the vehicle body.

11. Guide mechanism according to any of the preceding claims, characterised in that the solenoid (41) is incorporated between guide element (2) and base plate (3) and performs displacement to induce clamping in the event of electrical signals from an electronic vehicle sensor and/or brake light switch (Fig. 7).

12. Guide mechanism according to any of the preceding claims, characterised in that a main body (14'') as a stamped and bent component comprises two defining surfaces (16') with bores (46) for a roller shaft (43) as well as a concave supporting surface (47), two supporting ribs (45), indented clamping surfaces (12) and a lower clamping surface (21), and a pivot shaft (15') is fixed by two openings (48) (Figs. 8, 9).

13. Guide mechanism according to claim 18, characterised in that the main body (14'') is provided with a low-friction rotating guide roller (42), in a first locking stage wedges with round metal clamping surfaces (12') against a hard rubber plunger (5), and in a second locking stage wedges with a lower clamping surface (21) against a clamping surface (21') of a flange (23') of the base plate (3') (Figs. 8, 9).

14. Guide mechanism according to claim 1, characterised in that a clamping jaw (53) is attached with spring bias to the base plate (3") (Figs. 10, 11).

15. Guide mechanism according to any of the preceding claims, characterised in that the guide element is mounted with its pivot shaft (15") in a flexible bearing (38").

16. Guide mechanism according to any of the preceding claims, characterised in that the clamping surfaces are integrated as stepped clamping surfaces, by applying a flexible bonding layer (4''', 5''') to an aggressive toothed clamping surface (12''', 13''') (Figs. 12, 13).

17. Guide mechanism according to any of the preceding claims, characterised in that a winder (60) for the belt webbing is incorporated in the housing (32) of this guide mechanism (Fig. 15).

18. Guide mechanism according to claim 1, characterised in that a vehicle-sensitive sensor is incorporated in the guide mechanism.

19. Guide mechanism according to claim 18, characterised in that a movable sensor member (102) is arranged in the guide element (2), which is mounted rotatably on the vehicle, in such a way that this sensor member (102) acts on an activation member (100) and as a result the activation member (100) can be applied by a gripping surface (103) to the webbing (22).

20. Guide mechanism according to claim 19, characterised in that the activation member (103) is mounted rotatably as a pivot lever on the guide element (2), and the guide element (2) can be moved by the activation member with the clamping surface (12) towards the webbing (22) when thee activation member (103) itself has engaged with the webbing (22).

21. Guide mechanism according to claims 18 to 20, characterised in that the sensor member (102) is a ball.

22. Guide mechanism according to claim 1, characterised in that a stationary clamping jaw (93) and, together with a guide roller (87), a movable clamping jaw (89) are seated on a pivot pin (85) mounted on the vehicle, one clamping jaw (89) is provided with a toothed clamping surface (91) covered with a deformable material (92), and the other clamping jaw (93) comprises a deformable clamping pad (98) which forms a clamping surface and which is seated in a recess (99).

## Revendications

1. Dispositif de renvoi pour ceinture de sécurité, destiné à être monté de préférence sur le pied milieu ou le montant arrière de véhicules automobiles, équipé de moyens pour bloquer directement la sangle (22) de la ceinture par serrage et pour supporter la contrainte en cas d'accident, caractérisé en ce qu'il est prévu un dispositif d'arrêt à deux phases pour faire en sorte que, en présence des blocages fréquents, qui ne résultent pas d'un accident, après franchissement d'une décélération prédéterminée, il se produit un premier arrêt, constitué par un serrage peu agressif (5, 5', 5'', 5''') de la sangle de la ceinture, par basculement en levier d'un élément de renvoi (2) qui, en cas d'accident, à partir d'une décélération prédéterminée, plus élevée, passe à un deuxième arrêt comportant un serrage (12, 13; 32, 33) de la sangle de la ceinture pour résister à la charge sans glissement.

2. Dispositif de renvoi selon la revendication 1, caractérisé en ce que, pour le premier arrêt, l'élément de renvoi (2) peut être basculé avec un rapport de bras de levier supérieur à 2, de telle manière que deux surfaces de serrage préalable (4, 5) susceptibles de déformation élastique/plastique entrent en prise entre elles.

3. Dispositif de renvoi selon la revendication 1, caractérisé en ce que, en présence d'une plus forte décélération, resultant d'un accident, après déformation plastique d'au moins l'une des surfaces de serrage préalable déformables, en présence d'une nouvelle modification de position correspondante de l'élément de renvoi (2), deux surfaces de serrage plus agressives (21, 21', 32, 33) entrent en prise entre elles pour exécuter le deuxième arrêt, avec un serrage plus efficace de la sangle de la ceinture (frottement plus élevé, plus grand angle d'embrassement de la sang le de la ceinture, plus grande force de serrage de la ceinture).

4. Dispositif de renvoi selon la revendication 1, caractérisé en ce que l'élément de renvoi (2) est tourillonné avec précontrainte élastique par deux tourillons (8), dans deux bras oscillants (7) qui sont reliés à une plaque de base (3) par l'intermédiaire d'une zone d'amorce de rupture (6) (figure 1a).

5. Dispositif de renvoi selon la revendication 1, caractérisé en ce que le corps de base (14) de l'élément de renvoi (2) est constitué par une pièce découpée et pliée selon un profil en demi-cercle d'où partent, dans la direction axiale, deux bras de portée (15) ainsi que deux pattes de limitation (16) repliées vers le haut (figure 4).

6. Dispositif de renvoi selon la revendication 3, caractérisé en ce que les surfaces de serrage plus agressives sont constituées par un bord redressé (23) et par une partie de serrage (21) qui est ajustée sur ce bord en établissant une liaison par sûreté de forme.

7. Dispositif de renvoi selon les revendications 4 et 6, caractérisé en ce que le bord redressé (23) est fixé à la plaque de base (3) et la partie de serrage (21) est formée par l'élément de renvoi (2).

8. Dispositif de renvoi selon les revendications précédentes, caractérisé en ce que les bras oscillants (7) présentent, d'une part, un perçage de portée rond (24) destiné à recevoir les tourillons (8) et, d'autre part, une ouverture (25) présentant elle-même une bosse d'articulation (26) qui s'engage dans une cuvette de retenue (9) de la plaque de base (3) qui est emboutie en forme de profilé.

9. Dispositif de renvoi selon les revendications précédentes, caractérisé en ce que les bras oscillants (7) sont disposés à peu près horizontalement dans la position de départ.

10. Dispositif de renvoi selon les revendications précédentes, caractérisé en ce que le dispositif de renvoi est orienté avec une inclinaison, dans le sens de la marche, vers le point d'épaule de l'occupant et est fixé rigidement à la carrosserie.

11. Dispositif de renvoi selon les revendications précédentes, caractérisé en ce que l'électroaimant (41) est intégré entre l'élément de renvoi (2) et la plaque de base (3) et décrit une course de travail pour le déclenchement du coincement en réponse à des signaux électriques issus d'un capteur de véhicule électronique et/ou d'un interrupteur de feu stop (figure 7).

12. Dispositif de renvoi selon les revendications précédentes, caractérisé en ce qu'un corps de base (14''), constitué par une pièce découpée et pliée, présente deux surfaces de limitation (16) munies de perçages (46) destinées à recevoir un axe de rouleau (43), ainsi qu'une surface d'appui concave (47), deux nervures d'appui (45), des surfaces de serrage striées (12) et une surface de serrage inférieure (21) et en ce qu'un axe de pivotement (15') est monté fixe à travers deux ouvertures (18) (figures 8, 9).

13. Dispositif de renvoi selon la revendication 8, caractérisé en ce que le corps de base (14'') est équipé d'un rouleau de renvoi (42) qui tourne avec un faible frottement, que, dans une première phase d'arrêt, il serre au moyen de surfaces de serrage métalliques rondes (12') contre un tampon de caoutchouc dur (5) et que, dans une deuxième phase d'arrêt, il serre au moyen d'une surface de serrage inférieure (21) contre une surface de serrage (21') appartenant à un bord redressé (23') de la plaque de base (3') (figures 8, 9).

14. Dispositif de renvoi selon la revendication 1, caractérisé en ce qu'une mâchoire de serrage (53) est fixée sur la plaque de base (3'') avec précontrainte élastique (figures 10, 11).

15. Dispositif de renvoi selon une des revendications précédentes, caractérisé en ce que l'élément de renvoi tourillonne par son axe de rotation (15'') dans un palier élastique (38'').

16. Dispositif de renvoi selon une des revendications précedentes, caractérisé en ce que les surfaces de serrage sont intégrées en des surfaces de serrage étagées, cependant que, sur une surface de serrage agressive, dentée (12''', 13'''), est appliquée une couche d'adhérence flexible (4''', 5''') (figures 12, 13).

17. Dispositif de renvoi selon une des revendications précédentes, caractérisé en ce que, dans le carter (31) de ce dispositif de renvoi, est intégré un enrouleur (60) destiné à enrouler la sang le de la ceinture (15).

18. Dispositif de renvoi selon la revendication 1, caractérisé en ce qu'un capteur sensible au véhicule est intégré dans le dispositif de renvoi.

19. Dispositif de renvoi selon la revendication 18, caractérisé en ce qu'un élément capteur mobile (102) est agencé dans l'élément de renvoi (2) tourillonné sur le véhicule, de telle manière que cet élément capteur (102) agisse sur un organe d'actionnement (100) et que, sous cet effet, l'organe d'actionnement (100) puisse s'appliquer contre la sangle (22) de la ceinture par une surface de prise (103).

20. Dispositif de renvoi selon la revendication 19, caractérisé en ce que l'organe d'actionnement (103) est articulé sur l'élément de renvoi (2) pour constituer un levier oscillant et en ce que l'élément de renvoi (2) peut se rapprocher, par sa surface de serrage (12), de la sangle (22) de la ceinture, sous l'action de l'organe d'actionnement, lorsque l'organe d'actionnement (103) est lui-même entré en prise avec la sangle (22) de la ceinture.

21. Dispositif de renvoi selon les revendications 18 à 20, caractérisé en ce que l'élément capteur (102) est une bille.

22. Dispositif de renvoi selon la revendication 1, caractérisé en ce que, sur un axe de pivotement (85) fixé au véhicule, est montée une mâchoire de serrage fixe (93) et qu'une mâchoire de coincement mobile (89) est montée conjointement avec un rouleau de renvoi (87), en ce qu'une mâchoire de serrage (82) est munie d'une surface de serrage (91) dentée, recouverte d'une masse déformable (92) et en ce que l'autre mâchoire de serrage (93) présente un tampon de serrage déformable (98), qui forme une surface de serrage et qui est logé dans un évidement (99).

FIG. 1a

# FIG. 1b

## FIG. 2

## FIG. 3

# FIG. 4

# FIG. 5

# FIG. 6

# FIG. 7

FIG. 8

FIG. 9

# FIG. 10

# FIG. 11

## FIG. 12

## FIG. 13

# FIG. 14

# FIG. 15

# FIG. 16

# FIG. 17

# FIG. 18

# FIG. 19